(19) **Europäisches Patentamt**

**European Patent Office**

**Office européen des brevets**

(11) **EP 1 282 038 A2**

(12) **EUROPEAN PATENT APPLICATION**

(43) Date of publication:
05.02.2003 Bulletin 2003/06

(51) Int Cl.$^7$: **G06F 9/46**

(21) Application number: 02015651.9

(22) Date of filing: 16.07.2002

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **16.07.2001 JP 2001215405**<br><br>(71) Applicant: **MATSUSHITA ELECTRIC INDUSTRIAL**<br>**CO., LTD.**<br>**Kadoma-shi, Osaka-fu 571 (JP)** | (72) Inventor: **Tanaka, Katsuyoshi**<br>**Yokohama-shi, Kanagawa 255-0024 (JP)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Distributed processing system and distributed job processing method**

(57)     A distributed computer system includes a storage device 32 for saving, in a referable manner, data pertaining to a history of execution of jobs processed by a computer; a queued job completion time computation function 105 and a server availability computation function 106 which predict a completion time of a loaded job from the processing capability and operating status of the computer; and a job execution priority management function 103 for changing the priority of the loaded job in accordance with the predicted completion time of the job such that the job is completed within the execution time limit.

*FIG. 1*

**Description**

BACKGROUND OF THE INVENTION

1.Field of the Invention

The invention relates to a distributed computer system which integrates a plurality of computers (or servers) distributed over a network, as well as to a distributed processing system and a distributed job processing method, which effectively process a job loaded by a user, within a user's desired time limit.

2.Description of the Related Art

Nowadays, a computing system has become an important element in business activities, to such an extent that we can say with assurance that there remain no business activities which do not involve a computing system. Particularly, as a result of proliferation of the Internet and relevant technological innovation, which started in the late 1990s, a distributed computing system linked by way of a network has become more important than ever.

A factor responsible for this is as follows. In association with globalization of business activities to the extent that business activities have become borderless, competition among corporations has become more severe. Among business operations stemming from every site of business activities, processing of a certain business operation must be completed without fail within a predetermined period of time, even when this results in a delay in another business operation. If a corporation has failed to introduce a new product or service into the market earlier than competitors, the corporation cannot prevail in competition among corporations and fails to survive.

In order to efficiently process, within a short period of time, business operations stemming from every site of business activities, corporations have introduced a large amount of administrative resources and established a large-scale distributed computer system, by means of interconnecting a plurality of computers (e.g., servers) by way of a local area network (LAN) or a wide area network.

In relation to a case where a processing unit to be processed by a distributed computer system—which is called a job, a process, or a task—is executed by a computer (or a server), there have already been known a plurality of techniques which enable ascertainment of statuses of server resources and optimal distribution of jobs for effective utilization of server resources and improvement of processing efficiency.

As a method of distributing jobs in a distributed processing computer system, the following have already been practiced: (1) a method of distributing jobs at the time of startup thereof in accordance with the status of consumption of respective server resources, as described in Japanese Patent Application Laid-Open No. 11406/1998; (2) a method of predicting beforehand the amount of server resources which are to be consumed by jobs to be executed and of distributing the jobs such that an aggregate of server resources to be used by the jobs is not to exceed a total amount of resources of the server, as described in Japanese Patent Application Laid-Open No. 19864/1998; and (3) a method of distributing jobs in accordance with a preset policy.

As mentioned above, various techniques for efficiently processing jobs loaded in a distributed computer system have already been disclosed. However, there are disclosed substantially no techniques which, at the time of utilization of the distributed computer system, enable completion of jobs within a user's desired time limit.

Servers which constitute a large-scale distributed computer system are very expensive products. Since the system is constituted of a large number of servers, each of the previously-described job distribution methods effectively utilizes server resources.

When a user utilizes such a large-scale distributed computer system, billing has hitherto been performed on the basis of a track record of use of server resources, regardless of whether or not a job required by the user has been completed within a user's expected time limit. For example, there has been practiced a method in which the following information is saved in a job execution history: a department which has used respective server resources, a user, and hours during which the server resources have been used, and in which the thus-saved data are compiled.

Two major problems are encountered in utilizing and operating such a large-scale distributed computer system. A first problem lies in that, when requesting a job, a user cannot ascertain beforehand whether or not the job will be completed within the user's expected time limit. A second problem lies in that billing is performed on the basis of resources consumed by the job, regardless of whether or not the requested job has been completed within the user's expected time limit.

The conventional techniques enable efficient distribution of jobs loaded into a distributed computer system to respective servers in the sequence in which the jobs have been loaded. As a method of distributing jobs, there is disclosed (1) the previously-described method of determining a way to distribute jobs in consideration of the availability status of respective servers at the time of startup of the jobs.

Under this method, jobs are processed in the sequence in which the jobs have been loaded by the users.

Therefore, a completion time of a job changes greatly in accordance with the number of servers of the distributed computer system or the availability status thereof. For this reason, great difficulty is encountered when the user predicts a completion time of a job beforehand at the time of loading of the job.

As another previously-described method of distributing jobs, there is disclosed (2) a method of selecting an optimum server in consideration of resources of servers which are available at the time of distribution of jobs and statuses of other jobs, and of executing the jobs when there are executed jobs involving use of a known amount of server resources over the lifetime of the jobs (i.e., over a period from the time the jobs are started until the time the jobs are completed).

However, the user cannot ascertain completion times of the jobs loaded by other users when loading his/her job. Hence, under this method, the user cannot ascertain a completion time of the loaded job beforehand.

SUMMARY OF THE INVENTION

Present business activities entail a necessity for processing various jobs; that is, a job which is to be processed within a short period of time or a job whose processing involves consumption of several days. In the case of a single job whose processing involves consumption of several days, when the amount of server resources to be consumed during the lifetime of the job cannot be examined beforehand, the job distribution method cannot be used.

In this way, the related-art job distribution methods are for efficiently processing jobs within the shortest periods of time in the sequence in which the jobs are loaded into a distributed computer system. However, these methods do not taken into consideration a timetable element; that is, a user's desired completion time of a job.

In relation to billing processing of a related-art distributed computer system, track records of use of the computer system pertaining to jobs processed by respective servers (e.g., departments which have used the computer system, users, and operating hours) are compiled at a single location. A track record of use of the computer system is compiled on a per-user basis, and usage costs of the computer are billed. The track record of use of the computer used as a basis for billing a computer usage fee does not take into consideration whether or not the requested job has been completed within the user's desired time limit.

When the jobs have been processed in the sequence in which they had been loaded and if a job has not been completed within a user's expected time limit, the user's desire may be satisfied by means of executing his/her job at a higher priority than other jobs. The fact is that no consideration has hitherto been given to the quality of service for computer users. From the standpoint of users of a computer system, a track record of use of a computer system is preferably compiled in consideration of whether or not a user's requested job has been completed within a desired time limit.

The invention is to solve the above-described problems in the art and aims at providing a distributed processing system and a job distribution processing method, which enable prediction of a completion time of a user's requested job and distribution of jobs in consideration of completion time limits of jobs at the time of utilization of a computer system.

The invention also aims at providing a distributed processing system and a job distribution processing method, which performs billing operation in accordance with a service afforded to a computer user in consideration of whether or not the user's requested job has been completed within a desired time limit. A distributed processing system according to aspect 1 of the invention corresponds to a distributed processing system including a plurality of computers linked together by way of a network, the system comprising means (a storage device 32) for saving, in a referable manner, execution history data pertaining to a job processed by the computers; means (a queued job completion time computation function 105) for specifying an execution time limit of a job loaded by a user of the computers; means (a server availability computation function 106) for predicting, from processing capacity and operating conditions of the computers and the execution history data pertaining to the job, a completion time of the job which is loaded by the user by means of designating an execution time limit; and means (a job execution priority management function 103) for changing the priority of the job in accordance with the predicted completion time thereof such that the job is completed within the time limit.

By means of the distributed processing system according to aspect 1, a completion time of a job is predicted from processing capacity and operating conditions of the computers and the execution history data pertaining to the job. When a result of prediction has exceeded the execution time limit of a job of interest, the job can be completed within the designated execution time limit, by means of changing the priority of the job.

According to aspect 2, the distributed processing system of aspect 1 is characterized in that the means for predicting a completion of a job enables prediction of a completion time of a job which is currently executed and prediction of completion times of queued jobs.

By means of the distributed processing system of aspect 2, the means for predicting a completion time of a job enables prediction of a completion time of a job which is currently executed and prediction of completion times of queued jobs. Hence, there can be performed appropriate distribution of jobs involving effective utilization of resources such that a loaded job is completed within the shortest period of time.

According to aspect 3, the distributed processing system of aspect 1 or 2 is characterized by further comprising means for selecting from the execution history data a job analogous to the job loaded by the user, wherein the means for predicting a completion time of a loaded job predicts a completion time of a loaded job, by reference to execution history data pertaining to the selected analogous job.

By means of the distributed processing system of aspect 3, provision of the means for selecting from the execution history data a job analogous to the job loaded by the user enables retrieval of an analogous job from the execution history data when an analogous job is unknown, thereby enabling an improvement in the accuracy of prediction of a completion time of a job.

According to aspect 4, the distributed processing system of aspect 1 or 2 is characterized by further comprising means for inputting a predicted execution time of a job loaded by the user, wherein the means for predicting a completion time of a loaded job predicts a completion time of a loaded job, by reference to the entered, predicted execution time.

By means of the distributed processing system of aspect 4, even when a job analogous to a loaded job has never been performed in the past, the completion time of the job can be predicted by means of the user entering a predicted execution time. Hence, processing of the system can be pursued.

According to aspect 5, the distributed processing system of any one of aspects 1 through 4 is characterized by further comprising charging means for increasing or decreasing a computer usage fee per unit time for a loaded job in accordance with a change in the priority of the job when the priority of the loaded job has been changed by the means for adjusting the priority of a loaded job.

By means of the distributed processing system of aspect 5, a computer usage fee per unit time for a loaded job is increased or decreased in accordance with a change in the priority of the job, thereby enabling billing operation which appropriately maintains a balance between the execution time limit designated by the user and a computer usage fee.

According to aspect 6, the distributed processing system of any one of aspects 1 through 5 is characterized by further comprising charging means for increasing a computer usage fee per unit time for the loaded job when the priority of the loaded job is increased by the means for changing the priority of a job.

By means of the distributed processing system of aspect 6, a computer usage fee per unit time for a loaded job is increased when the priority of the job is increased, thereby enabling billing operation which appropriately maintains a balance between the execution time limit designated by the user and a computer usage fee.

According to aspect 7, the distributed processing system of any one of aspects 1 through 6 is characterized by further comprising charging means for increasing a computer usage fee per unit time for the loaded job when priorities of other jobs are lowered in order to increase the priority of the loaded job with use of the means for changing the priority of a job.

By means of the distributed processing system of aspect 7, a computer usage fee per unit time for a job whose priority has been lowered for increasing the priority of another job is decreased, thereby enabling billing operation which appropriately maintains a balance between the execution time limit designated by the user and a computer usage fee.

According to aspect 8, the distributed processing system of aspect 7 is characterized in that the charging means determines a computer usage fee such that there is achieved a counterbalance between the amount of decrease in the computer usage fee for the jobs whose priorities have been lowered and the amount of increase in the computer usage fee for the job whose priority has been increased.

By means of the distributed processing system of aspect 8, there is performed a billing operation such that there is achieved a counterbalance between the amount of decrease in the computer usage fee for the jobs whose priorities have been lowered and the amount of increase in the computer usage fee for the job whose priority has been increased. A bill can be equitably issued to a user without changing a computer usage fee of the entire processing system.

According to aspect 9, the distributed processing system of any one of aspects 1 through 8 is characterized by further comprising means for providing the shortest predicted completion time of the job when the job is not expected to be completed within a designated execution time limit even if the priority of the loaded job is changed.

By means of the distributed processing system of aspect 9, when completion of the job is not expected to be completed within a designated execution time limit even if the priority of the loaded job is changed, a user can be prompted to take an appropriate countermeasure, by means of providing the shortest predicted completion time of the job.

According to aspect 10, the distributed processing system of aspect 9 is characterized in that the predicted shortest completion time of the job and a computer usage fee per unit time to be applied to the job are provided simultaneously.

By means of the distributed processing system of aspect 10, when the job is not expected to be completed within a designated execution time limit, provision of information satisfying the user and prompting a user to take an appropriate countermeasure can be attained, by means of providing the shortest predicted completion time of the job and a computer usage fee per unit time.

A distributed job processing method according to aspect 11 of the invention corresponds to a distributed job processing method employing a plurality of computers linked together by way of a network, the system comprising the steps of specifying an execution time limit of a job loaded by a user of the computers (S21); predicting, from processing capacity and operating conditions of the computers and execution history data pertaining to the job processed by the computers, a completion time of the loaded job (S22 through S27); and changing the priority of the job in accordance with the predicted completion time thereof such that the job is completed within the time limit (S28: fail to complete a job).

By means of the distributed job processing method according to aspect 11, a completion time of a job is predicted from processing capacity and operating conditions of the computers and the execution history data pertaining to the job. When a result of prediction has exceeded the execution time limit of a job of interest, the job can be completed within the designated execution time limit, by means of changing the priority of the job.

According to aspect 12, the distributed job processing method of aspect 11 is characterized in that, in the step of predicting a completion of a job, there are predicted a completion time of a job which is currently executed and completion times of queued jobs.

By means of the distributed job processing method of aspect 12, in the step of predicting a completion time of a job, there can be separately predicted a completion time of a job which is currently executed and completion times of queued jobs. Hence, there can be performed appropriate distribution of jobs involving effective utilization of resources such that a loaded job is completed within the shortest period of time.

According to aspect 13, the distributed job processing method of aspect 11 or 12 is characterized by further comprising the steps of electing from the execution history data a job analogous to the job loaded by the user; and predicting a completion time of a loaded job, by reference to execution history data pertaining to the selected analogous job.

By means of the distributed job processing method of aspect 13, provision of the means for selecting from the execution history data a job analogous to the job loaded by the user enables retrieval of an analogous job from the execution history data when an analogous job is unknown, thereby enabling an improvement in the accuracy of prediction of a completion time of a job.

According to aspect 14, the distributed job processing method of any one of aspects 11 through 13 is characterized by further comprising the steps of inputting a predicted execution time of a job loaded by the user; and predicting a completion time of a loaded job, by reference to the entered, predicted execution time.

By means of the distributed job processing method of aspect 14, even when a job analogous to a loaded job has never been performed in the past, the completion time of the job can be predicted by means of the user entering a predicted execution time. Hence, processing of the system can be pursued.

According to aspect 15, the distributed job processing method of any one of aspects 11 through 14 is characterized by further comprising the step of increasing or decreasing a computer usage fee per unit time for a loaded job in accordance with a change in the priority of the job when the priority of the loaded job has been changed in the step of adjusting the priority of a job.

By means of the distributed job processing method of aspect 15, a computer usage fee per unit time for a loaded job is increased or decreased in accordance with a change in the priority of the job, thereby enabling billing operation which appropriately maintains a balance between the execution time limit designated by the user and a computer usage fee.

According to aspect 16, the distributed job processing method of any one of aspects 11 through 15 is characterized by further comprising the step of increasing a computer usage fee per unit time for the loaded job when the priority of the loaded job is increased in the step of changing the priority of a job.

By means of the distributed job processing method of aspect 16, a computer usage fee per unit time for a loaded job is increased when the priority of the job is increased, thereby enabling billing operation which appropriately maintains a balance between the execution time limit designated by the user and a computer usage fee.

According to aspect 17, the distributed job processing method of any one of aspects 11 through 16 is characterized by further comprising the step of increasing a computer usage fee per unit time for the loaded job when priorities of other jobs are lowered in order to increase the priority of the loaded job in the step of changing the priority of a job.

By means of the distributed processing system of aspect 17, a computer usage fee per unit time for a job whose priority has been lowered for increasing the priority of another job is decreased, thereby enabling billing operation which appropriately maintains a balance between the execution time limit designated by the user and a computer usage fee.

According to aspect 18, the distributed job processing method of 17 is characterized by further comprising the step of determining a computer usage fee such that there is achieved a counterbalance between the amount of decrease in the computer usage fee for the jobs whose priorities have been lowered and the amount of increase in the computer usage fee for the job whose priority has been increased.

By means of the distributed processing system of aspect 18, there is performed a billing operation such that there is achieved a counterbalance between the amount of decrease in the computer usage fee for the jobs whose priorities have been lowered and the amount of increase in the computer usage fee for the job whose priority has been increased. A bill can be equitably issued to a user without changing a computer usage fee of the entire processing system.

According to aspect 19, the distributed job processing method of any one of aspects 11 through 18 is characterized by further comprising the step of providing the shortest predicted completion time of the job when the job is not expected to be completed within a designated execution time limit even when the priority of the loaded job is changed.

By means of the distributed processing system of aspect 19, when the job is not expected to be completed within a designated execution time limit even if the priority of the loaded job is changed, a user can be prompted to take an appropriate countermeasure, by means of providing the shortest predicted completion time of the job.

According to aspect 20, the distributed job processing method of aspect 19 is characterized by further comprising the step of simultaneously providing the predicted shortest completion time of the job and a computer usage fee per unit time to be applied to the job.

By means of the distributed processing system of aspect 20, when the job is not expected to be completed within a designated execution time limit, provision of information satisfying the user and prompting a user to take an appropriate countermeasure can be attained, by means of providing the shortest predicted completion time of the job and a computer usage fee per unit time.

BRIEF DESCRIPTION OF THE DRAWINGS

Fig. 1 is a block diagram showing the configuration of a distributed processing system according to an embodiment of the invention;
Fig. 2 is a block diagram showing an example configuration of the principal functions of the distributed processing system according to the embodiment;
Fig. 3 is a flowchart for describing the operation of the distributed processing system according to the embodiment;
Fig. 4 is a view showing a job request format to be sent to a job queuing server;
Fig. 5 is a view showing a result of retrieval of analogous jobs in list form;
Fig. 6 is a view showing a data format to be used for managing operating conditions of respective servers;
Fig. 7 is a view showing an attribute format pertaining to a queued job under management of the job queuing server;
Fig. 8 is a view showing a storage format of job execution history data;
Fig. 9 is a flowchart for describing operation of charge aggregation operation; and
Fig. 10 is a view showing an output format of a track record report about usage hours of a CPU according to a user.

DESCRIPTION OF THE PREFERRED EMBODIMENTS

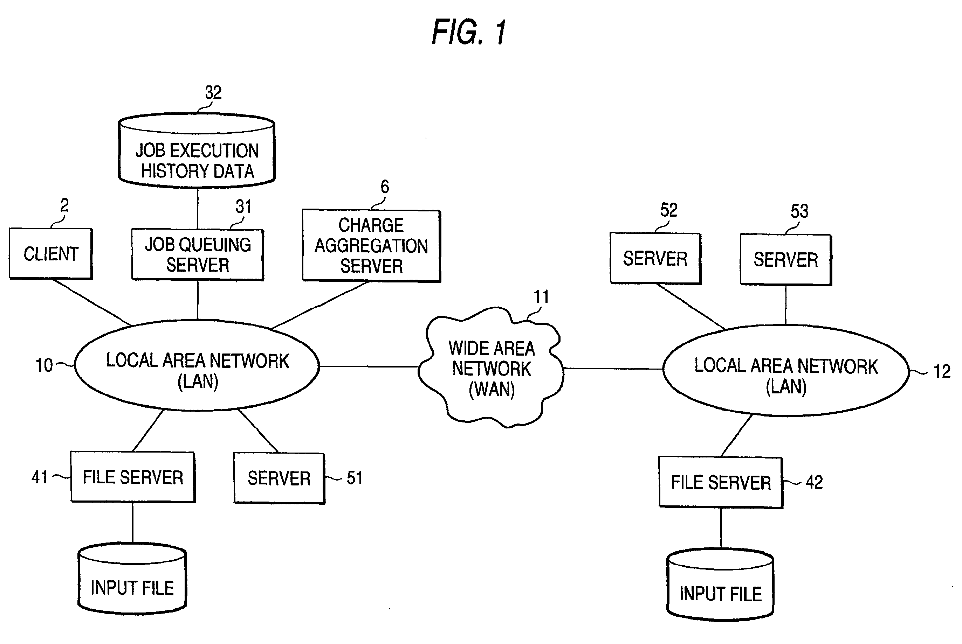

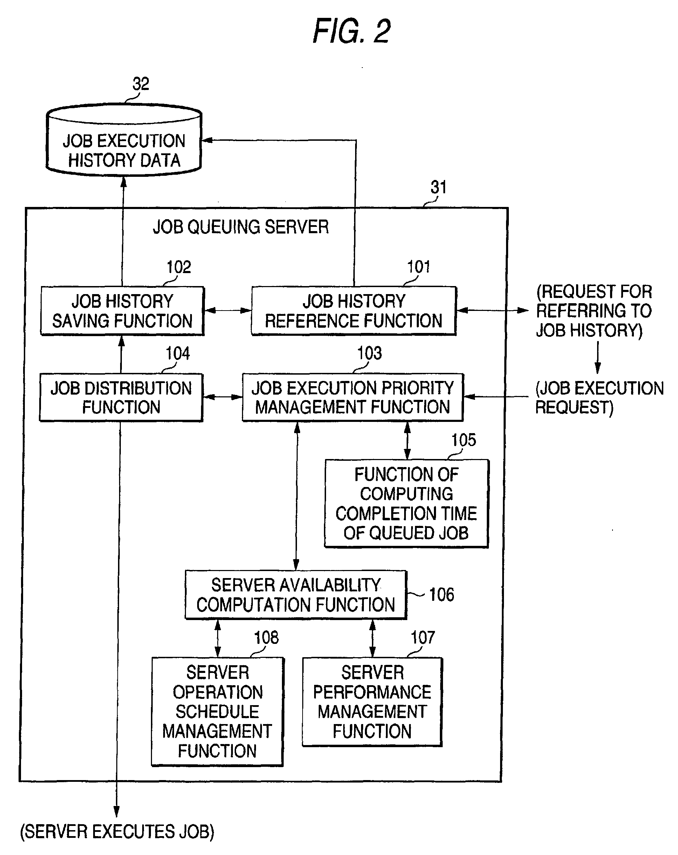

An embodiment of the invention will be described by reference to the accompanying drawings. Fig. 1 is a block diagram showing the configuration of a distributed computer system which implements a distributed processing system according to an embodiment of the invention. Fig. 2 is a block diagram showing an example functional configuration of a job queuing server which materializes primary functions according to the invention in connection with the distributed computer system shown in Fig. 1.

As shown in Fig. 1, a client 2 is a computer which loads a job. A job queuing server 31 is a computer which determines a priority of a job for completing the job within a user's desired time limit, searches for a server capable of optimally executing the job, and distributes the job to such a server. A storage device 32 for saving data pertaining to the history of execution of a job (hereinafter simply called "job execution history data") is connected to the job queuing server 31.

File servers 41, 42 are computers for holding an input file and an application program, which are to be used for a job. Servers 51, 52, and 53 are computers for executing a job. A charge aggregation server 6 is a computer for effecting a charging operation on the basis of job execution history data. A job file, an input file, and an application file are stored in a storage device connected to the servers 41, 42.

The client 2 and the servers 31, 41, 42, 51, 52, 53, and 6 are electronic computers, such as personal computers and workstations. They are interconnected by way of local area networks 10, 12 and a wide area network 11.

As shown in Fig. 2, the job queuing server 31 comprises a job history reference function 101 for referring to data pertaining to a history of jobs executed in the past; a job history saving function 102 for saving job execution history data; a job execution priority management function 103 for determining a priority of a job such that a job is to be completed within a user's desired time limit; a job distribution function 104 of selecting an optimal server for executing a loaded job and automatically distributing the job to the thus-selected server; a queued job completion time computation function 105 of predicting a completion time of a queued job; a server availability computation function 106 of predicting a completion time of processing being executed by a server; a server performance management function 107 for normalizing the capacity of a server which executes a job; and a server operation schedule management function 108 for managing a planned schedule for a server which executes a job.

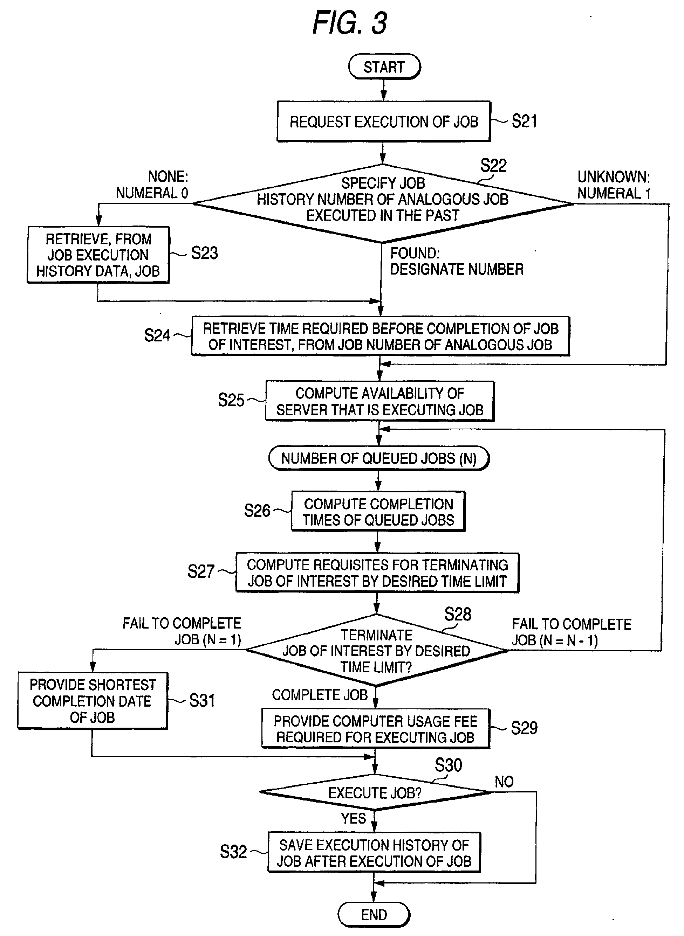

The operation of the distributed computer system having the foregoing configuration will now be described by reference to a flowchart shown in Fig. 3.

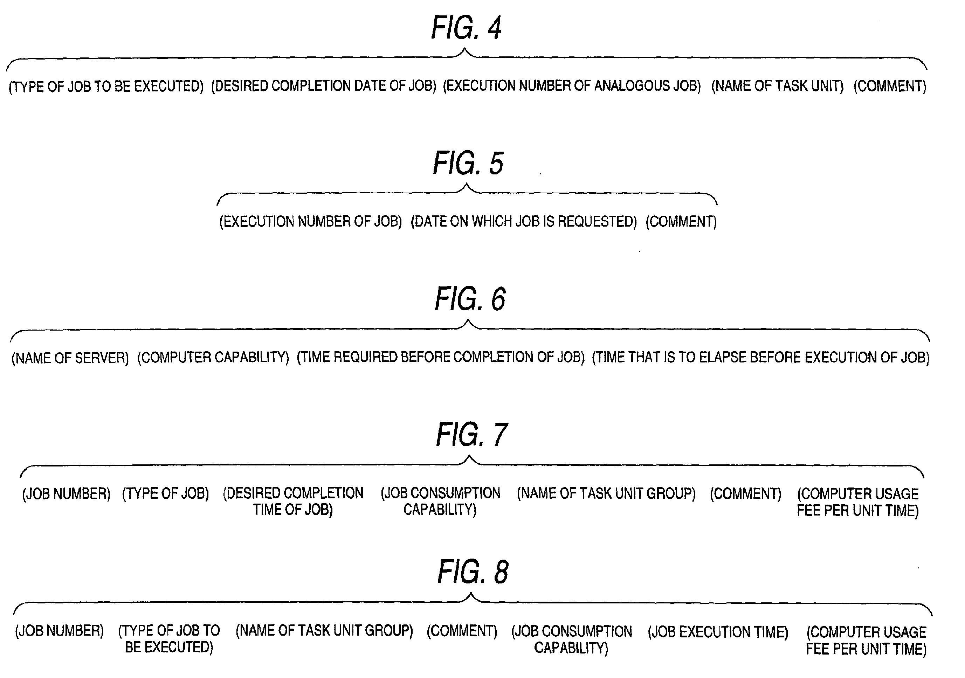

When a user of the client 2 executes a job, in step S21 the user specifies an execution time limit in the form of a job request form shown in Fig. 4, thus loading the job into the job queuing server 31. At this time, if there is no job completion time or desired time limit, the user specifies numeral "0" in an expected job completion date field.

If a job analogous to the job which is to be executed this time has ever been executed and the user knows an execution number of the analogous job, the user specifies the execution number of the analogous job. If a job analogous to the job which is to be executed this time has ever been executed but the user does not know the execution number of the analogous job, the user specifies numeral "0" for the execution number of the analogous job. If a job analogous to the job which is to be executed this time has never been executed, the user specifies a special character "*" and a user's predicted time (seconds) which will be required before completion of a job next to numeral "1."

Next, in step S22 a determination is made as to whether or not the execution number of the analogous job is designated. If numeral "0" is specified, processing proceeds to step S23. In contrast, if a special character "*" and a user's predicted time (seconds) which will be required before completion of a job are specified next to numeral "1," processing proceeds to step S25. If the execution number of the analogous job is designated with a numeral other than those set forth, processing proceeds to step S24.

If the user has specified numeral "0" as the execution number of the analogous job, in step S23 the analogous job is retrieved from job execution history data 32 by means of the job history reference function 101. At that time, the job history reference function 101 utilizes, e.g., a user's name, the kind of a job, and the name of a task unit group. The job queuing server 31 displays a list of results of retrieval of analogous jobs in the form of an analogous job display format shown in Fig. 5. The user selects an execution number of an analogous job. When the execution number of the analogous job has become known by means of any one of the methods, in step S24 the job history reference function 101 searches, from the job history data 32, for a time which will be required before completion of the job.

Next, the availability of the server capable of executing the job loaded this time is computed, by means of the server availability computation function 106. Specifically, a completion time of the loaded job is precisely predicted on the basis of a job progress rate of the job currently executed in the server and an operation schedule of the server.

The server availability computation function 106 receives information about computation capability of each server (SPEC) from the server performance management function 107, which manages computation capability of each server. For instance, computation capability is computed by the following equation.

$$SPEC = \text{Frequency of a CPU (MHz) x the number of CPUs x real}$$

$$\text{storage capacity (MB)}$$

Next, the server availability computation function 106 ascertains a timetable and hours during which a server will be available with regard to the respective servers, by way of the server operation schedule management function 108. For example, if a server is described as being scheduled to stop operation 12 hours from now, the server is omitted from candidates available for a job.

Finally, in order to compute a job progress rate of each server (PROG), the server availability computation function 106 merges operating conditions of respective servers in the data format shown in Fig. 6. At this point in time, the availability (AVA) of each server with regard to queued jobs can be computed. For example, a job progress rate and availability can be computed in the following manners:

$$PROG = \text{time elapsed for executing a job (seconds) x time required}$$

$$\text{until completion of the job (seconds)}$$

$$AVA = \text{job progress rate (PROG) x computation capability of a server}$$

$$\text{(SPEC)}$$

In step S25, the availability (AVA) of respective servers is computed, and computation results of all servers which have been compiled are used as availability.

Next, there will be computed a time required until completion of N queued jobs. Queued jobs are managed by the job queuing server 31 in an attribute format shown in Fig. 7. Job consumption capability is determined, by means of multiplying the computation capability (SPEC) required for completing a job of interest by a time required until completion of the job (seconds).

For instance, job consumption capability of a job for which a server of SPEC=100 requires 50 seconds is determined as 100 x 50 = 5000. When this job is executed by a server having computation capability SPEC = 200, a time (Quitime) required until completion of the job becomes 5000/200 = 25 (seconds).

In this way, in step S26, an aggregate of job consumption capabilities of queued jobs is divided by an aggregate of computation capabilities of servers capable of executing the queued jobs. The result of division is added to the availability (AVA) computed in step S25, thereby computing the time (Quitime) required until completion of a currently-queued job.

Next, there is determined a requirement for completing within a time limit a job requested by the user this time. In other words, a determination is made as to whether or not the job will be completed by a user's desired date and time, by means of changing the priorities of queued jobs.

In a case where priorities of queued jobs are changed, a computer usage fee per unit time is assumed to arise as compared with that which will be incurred in a normal situation. At that time, reference is made to a computer usage fee management function of the charge aggregation server 6 with regard to the rate of revision of a computer usage fee per unit time.

Criteria for revision of computer usage fees are as follows.

Criteria 1: In relation to a job 1 which can be completed by a designated, desired completion date by means of changing priorities of queued jobs, priorities of queued jobs are changed within a range in which the user's desired time limit can be achieved. At this time, a computer usage fee which is one rank higher than a currently applicable computer usage fee is applied to the job 1.

Criteria 2: When the priority of the queued job 1 for which a desired completion date has been designated is increased so as to become higher than that of a job 2 for which no desired completion date is designated, a computer usage fee which is one rank higher than that applied to the job 2 is applied to the job 1. At this time, a computer usage fee to be applied to the job 2 is lowered by one rank as compared to that currently applied to the job 1.

In step S27, on the basis of such criteria, a determination is made as to whether or not a job will be completed by a user's desired time limit (i.e., Reqtime), by means of, e.g., the following computation equation.

$$\text{Reqtime} \geq \text{current time} + \text{availability (AVA)} + \text{completion time of a queued job (Qutime)}$$

A determination is made in the following three ways by means of the equation. A first determination is directed toward a case where a job of interest can be completed by a user's desired time limit, and processing proceeds to step S29. In step S29, a computer usage fee per unit time which is a requisite for completing a job by the user's desired time limit is provided to the user.

Next, the user renders a final determination of whether or not to execute a job, on the basis of the computer usage fees per unit time provided by the job queuing server 31 and expected completion times. If the job is not to be executed, processing is terminated in step S30. In contrast, if the job is to be executed, in step S32 various data sets pertaining to a job execution history are saved in the job execution history data 32 in the storage format shown in Fig. 8 after completion of the job.

A second determination is directed toward a case where a user's desire cannot be satisfied, in which case a determination is again rendered by means of increasing the priority of a queued job of interest by one rank. To this end, the number of queued jobs N is reduced by one, and processing returns to step S25, where a determination is repeated by means of the computation equation.

A third determination is directed toward a case where a job of interest cannot be expected to be completed by a user's desired time limit even when the priority of the queued job is increased to the highest priority level. In this case, processing proceeds to step S31, in which an expected completion date which will be achieved when the job is executed in the shortest period of time is provided to the user. Further, a computer usage fee per unit time is also provided to the user.

According to the embodiment, a job is completed by a user's desired time limit in consideration of operating condition of a distributed computer system. Hence, there is implemented a function of linking a change in job priority to a computer usage fee per unit time. Even when a user's desire cannot be satisfied, there is implemented a function of satisfying the user's desire to the extent possible, by means of implementing a function of providing the shortest completion schedule of a job to the user.

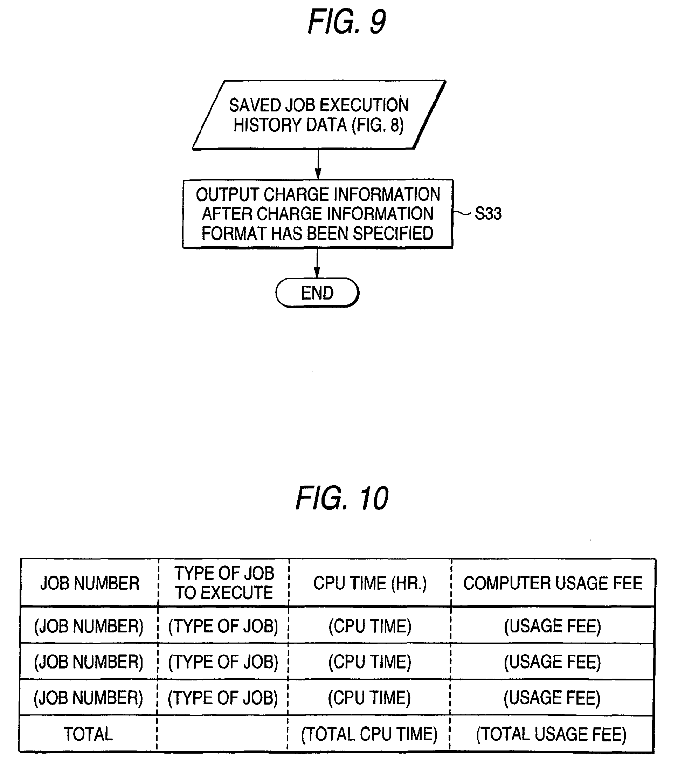

Next, the charge aggregation processing of the embodiment will be described by reference to a flowchart shown in Fig. 9. The charge aggregation server 6 has the function of compiling charge aggregation information, which is based on a computer usage fee per unit time set at the time of changing of priority of a queued job, from the job execution history data saved in step S32 and of outputting the thus-compiled information.

In step S33, a computer usage fee is computed on a per-user basis from the information which assumes the storage format of the job execution history data 32 and is shown in Fig. 8. For instance, a computer usage fee is computed on a user-by-user basis in the output format shown in Fig. 10. Here, an individual computer usage fee is determined, by means of multiplying a computer usage fee per unit time by a time which elapses before completion of a job.

As mentioned above, in the present embodiment, there is embodied a function of billing a computer usage fee in accordance with a rate of revision of a priority when a user has changed priorities of queued jobs in order to complete a job by a user's desired date and time. In this way, when a user uses a distributed computer system with a higher priority, a bill corresponding to the use of the system can be issued, thereby providing equitable service to users.

As has been described, according to the invention, a user predicts a completion time of his/her requested job beforehand and changes the priority of the job while ascertaining operating status of a computer. As a result, there are provided a distributed processing system and a distributed job processing method, which provide jobs in consideration of a user's desired completion time limit.

Further, the invention has embodied a function of linking a change in the priority of a queued job with a computer usage fee per unit time. There is performed billing operation which takes into consideration a case where a requested job cannot be completed with a user's desired time limit. As a result, there can be provided a distributed processing system and a distributed job processing method, which issue bills to users equitably.

**Claims**

1.   A distributed processing system including a plurality of computers linked together by way of a network, the system comprising:

   means for saving, in a referable manner, execution history data pertaining to a job processed by the computers;
   means for specifying an execution time limit of a job loaded by a user of the computers;
   means for predicting, from processing capacity and operating conditions of the computers and the execution history data pertaining to the job, a completion time of the job which is loaded by the user by means of designating an execution time limit; and
   means for changing the priority of the job in accordance with the predicted completion time thereof such that the job is completed within the time limit.

2.   The distributed processing system according to claim 1, wherein the means for predicting a completion time of a job enables prediction of a completion time of a job which is currently executed and prediction of completion times of queued jobs.

3.   The distributed processing system according to claim 1 or 2, further comprising:

   means for selecting from the execution history data a job analogous to the job loaded by the user, wherein the means for predicting a completion time of a loaded job predicts a completion time of a loaded job, by reference to execution history data pertaining to the selected analogous job.

4.   The distributed processing system according to claim 1 or 2, further comprising:

   means for inputting a predicted execution time of a job loaded by the user, wherein the means for predicting a completion time of a loaded job predicts a completion time of the loaded job, by reference to the entered, predicted execution time.

5.   The distributed processing system according to claim 1 or 2, further comprising:

   charging means for increasing or decreasing a computer usage fee per unit time for a loaded job in accordance with a change in the priority of the job when the priority of the loaded job has been changed by the means for adjusting the priority of a loaded job.

**6.** The distributed processing system according to claim 1 or 2, further composing:

charging means for increasing a computer usage fee per unit time for the loaded job when the priority of the loaded job is increased by the means for changing the priority of a job.

**7.** The distributed processing system according to claim 1 or 2, further comprising:

charging means for increasing a computer usage fee per unit time for the loaded job when priorities of other jobs are lowered in order to increase the priority of the loaded job with use of the means for changing the priority of a job.

**8.** The distributed processing system according claim 7, wherein the charging means determines a computer usage fee such that there is achieved a counterbalance between the amount of decrease in the computer usage fee for the jobs whose priorities have been lowered and the amount of increase in the computer usage fee for the job whose priority has been increased.

**9.** The distributed processing system according to claim 1 or 2, further comprising:

means for providing the shortest predicted completion time of the job when the job is not expected to be completed within a designated execution time limit even if the priority of the loaded job is changed.

**10.** The distributed processing system according to claim 9, wherein the predicted shortest completion time of the job and a computer usage fee per unit time to be applied to the job are provided simultaneously.

**11.** A distributed job processing method employing a plurality of computers linked together by way of a network, the method comprising the steps of:

specifying an execution time limit of a job loaded by a user of the computers;
predicting, from processing capacity and operating conditions of the computers and execution history data pertaining to the job processed by the computers, a completion time of the loaded job; and
changing the priority of the job in accordance with the predicted completion time thereof such that the job is completed within the time limit.

**12.** The distributed job processing method according to claim 11, wherein, in the step of predicting a completion time of a job, there are predicted a completion time of a job which is currently executed and completion times of queued jobs.

**13.** The distributed job processing method according to claim 11 or 12, further comprising the steps of:

selecting from the execution history data a job analogous to the job loaded by the user; and
predicting a completion time of a loaded job, by reference to execution history data pertaining to the selected analogous job.

**14.** The distributed job processing method according to claim 11 or 12, further comprising the steps of:

inputting a predicted execution time of a job loaded by the user; and
predicting a completion time of a loaded job, by reference to the entered, predicted execution time.

**15.** The distributed job processing method according to claim 11 or 12, further comprising the step of:

increasing or decreasing a computer usage fee per unit time for a loaded job in accordance with a change in the priority of the job when the priority of the loaded job has been changed in the step of adjusting the priority of a job.

**16.** The distributed job processing method according to claim 11 or 12, further comprising the step of:

increasing a computer usage fee per unit time for the loaded job when the priority of the loaded job is increased in the step of changing the priority of a job.

**17.** The distributed job processing method according to claim 11 or 12, further comprising the step of:

increasing a computer usage fee per unit time for the loaded job when priorities of other jobs are lowered in order to increase the priority of the loaded job in the step of changing the priority of a job.

**18.** The distributed job processing method according claim 17, further comprising the step of:

determining a computer usage fee such that there is achieved a counterbalance between the amount of decrease in the computer usage fee for the jobs whose priorities have been lowered and the amount of increase in the computer usage fee for the job whose priority has been increased.

**19.** The distributed job processing method according to claim 11 or 12, further comprising the step of:

providing the shortest predicted completion time of the job when the job is not expected to be completed within a designated execution time limit even when the priority of the loaded job is changed.

**20.** The distributed job processing method according to claim 19, further comprising the step of:

simultaneously providing the predicted shortest completion time of the job and a computer usage fee per unit time to be applied to the job.

**21.** A recording program in which a distributed job processing method is performed, said distributed job processing method being applied to a plurality of computers linked together by way of a network, comprising the steps of:

specifying an execution time limit of a job loaded by a user of the computers;
predicting, from processing capacity and operating conditions of the computers and execution history data pertaining to the job processed by the computers, a completion time of the loaded job; and
changing the priority of the job in accordance with the predicted completion time thereof such that the job is completed within the time limit.

**22.** A recording medium in which a distributed job processing method is stored, said distributed job processing method being applied to a plurality of computers linked together by way of a network, comprising the steps of:

specifying an execution time limit of a job loaded by a user of the computers;
predicting, from processing capacity and operating conditions of the computers and execution history data pertaining to the job processed by the computers, a completion time of the loaded job; and
changing the priority of the job in accordance with the predicted completion time thereof such that the job is completed within the time limit.

# FIG. 1

EP 1 282 038 A2

# FIG. 2

```
                    32
        ┌──────────────────────┐
        │  JOB EXECUTION       │
        │  HISTORY DATA        │
        └──────────────────────┘

                                          31
┌──────────────────────────────────────────────────┐
│            JOB QUEUING SERVER                      │
│                                                    │
│   102                        101                   │
│  ┌──────────────┐          ┌──────────────┐        │   (REQUEST FOR
│  │ JOB HISTORY  │◄────────►│ JOB HISTORY  │◄──────►│   REFERRING TO
│  │ SAVING       │          │ REFERENCE    │        │   JOB HISTORY)
│  │ FUNCTION     │          │ FUNCTION     │        │
│  └──────────────┘          └──────────────┘        │
│           104                      103             │   (JOB EXECUTION
│  ┌──────────────┐          ┌──────────────────┐    │   REQUEST)
│  │ JOB          │◄────────►│ JOB EXECUTION    │◄───│
│  │ DISTRIBUTION │          │ PRIORITY         │    │
│  │ FUNCTION     │          │ MANAGEMENT       │    │
│  └──────────────┘          │ FUNCTION         │    │
│                            └──────────────────┘    │
│                                         105        │
│                            ┌──────────────────┐    │
│                            │ FUNCTION OF      │    │
│                            │ COMPUTING        │    │
│                            │ COMPLETION TIME  │    │
│                            │ OF QUEUED JOB    │    │
│                            └──────────────────┘    │
│                                                    │
│          ┌──────────────────────┐  106             │
│          │ SERVER AVAILABILITY  │                  │
│          │ COMPUTATION FUNCTION │                  │
│          └──────────────────────┘                  │
│            108               107                   │
│   ┌──────────────┐    ┌──────────────┐             │
│   │ SERVER       │    │ SERVER       │             │
│   │ OPERATION    │    │ PERFORMANCE  │             │
│   │ SCHEDULE     │    │ MANAGEMENT   │             │
│   │ MANAGEMENT   │    │ FUNCTION     │             │
│   │ FUNCTION     │    │              │             │
│   └──────────────┘    └──────────────┘             │
└──────────────────────────────────────────────────┘

(SERVER EXECUTES JOB)
```

## FIG. 3

```
                        ( START )
                            │
                            ▼
            ┌─────────────────────────────┐
            │   REQUEST EXECUTION OF JOB   │──── S21
            └─────────────────────────────┘
                            │
                            ▼
                                                    S22
  NONE:                 ╱SPECIFY JOB╲                      UNKNOWN:
  NUMERAL 0      ╱HISTORY NUMBER OF ANALOGOUS JOB╲         NUMERAL 1
         ◄──────◄    EXECUTED IN THE PAST         ►──────►
                     ╲                           ╱
   ┌──────────────┐   ╲                         ╱
   │ RETRIEVE, FROM│        FOUND:
   │  JOB EXECUTION│── S23  DESIGNATE NUMBER
   │ HISTORY DATA, JOB│           │
   └──────────────┘              ▼
          │    ┌────────────────────────────────────────────┐
          └───►│ RETRIEVE TIME REQUIRED BEFORE COMPLETION OF JOB│
    S24 ───────│ OF INTEREST, FROM JOB NUMBER OF ANALOGOUS JOB │
               └────────────────────────────────────────────┘
                            │
                            ▼
               ┌────────────────────────────┐
        S25 ───│   COMPUTE AVAILABILITY OF   │
               │ SERVER THAT IS EXECUTING JOB│
               └────────────────────────────┘
                            │
                            ▼
               (  NUMBER OF QUEUED JOBS (N)  )
                            │
                            ▼
               ┌────────────────────────────┐
        S26 ───│   COMPUTE COMPLETION       │
               │   TIMES OF QUEUED JOBS     │
               └────────────────────────────┘
                            │
                            ▼
               ┌────────────────────────────────────┐
        S27 ───│ COMPUTE REQUISITES FOR TERMINATING │
               │ JOB OF INTEREST BY DESIRED TIME LIMIT│
               └────────────────────────────────────┘
                            │
                            ▼
                                            S28
 FAIL TO COMPLETE      ╱ TERMINATE ╲           FAIL TO COMPLETE
 JOB (N = 1)      ╱ JOB OF INTEREST BY DESIRED ╲    JOB (N = N - 1)
        ◄────────◄       TIME LIMIT?            ►────────►
                   ╲                           ╱
  ┌──────────────┐      COMPLETE JOB
  │PROVIDE SHORTEST│           │
  │COMPLETION DATE │── S31     ▼
  │   OF JOB      │  ┌────────────────────────────┐
  └──────────────┘  │ PROVIDE COMPUTER USAGE FEE  │── S29
          │         │  REQUIRED FOR EXECUTING JOB │
          └────────►└────────────────────────────┘
                            │
                            ▼            S30
                        ╱ EXECUTE ╲        NO
                       ◄   JOB?    ►──────►
                        ╲         ╱
                          YES│
                            ▼
               ┌────────────────────────────┐
        S32 ───│  SAVE EXECUTION HISTORY OF  │
               │ JOB AFTER EXECUTION OF JOB │
               └────────────────────────────┘
                            │
                            ▼
                        (  END  )
```

## FIG. 4

(TYPE OF JOB TO BE EXECUTED)　(DESIRED COMPLETION DATE OF JOB)　(EXECUTION NUMBER OF ANALOGOUS JOB)　(NAME OF TASK UNIT)　(COMMENT)

## FIG. 5

(EXECUTION NUMBER OF JOB)　(DATE ON WHICH JOB IS REQUESTED)　(COMMENT)

## FIG. 6

(NAME OF SERVER)　(COMPUTER CAPABILITY)　(TIME REQUIRED BEFORE COMPLETION OF JOB)　(TIME THAT IS TO ELAPSE BEFORE EXECUTION OF JOB)

## FIG. 7

(JOB NUMBER)　(TYPE OF JOB)　(DESIRED COMPLETION TIME OF JOB)　(JOB CONSUMPTION CAPABILITY)　(NAME OF TASK UNIT GROUP)　(COMMENT)　(COMPUTER USAGE FEE PER UNIT TIME)

## FIG. 8

(JOB NUMBER)　(TYPE OF JOB TO BE EXECUTED)　(NAME OF TASK UNIT GROUP)　(COMMENT)　(JOB CONSUMPTION CAPABILITY)　(JOB EXECUTION TIME)　(COMPUTER USAGE FEE PER UNIT TIME)

# FIG. 9

SAVED JOB EXECUTION
HISTORY DATA (FIG. 8)

↓

OUTPUT CHARGE INFORMATION
AFTER CHARGE INFORMATION ~ S33
FORMAT HAS BEEN SPECIFIED

↓

( END )

# FIG. 10

| JOB NUMBER | TYPE OF JOB TO EXECUTE | CPU TIME (HR.) | COMPUTER USAGE FEE |
|---|---|---|---|
| (JOB NUMBER) | (TYPE OF JOB) | (CPU TIME) | (USAGE FEE) |
| (JOB NUMBER) | (TYPE OF JOB) | (CPU TIME) | (USAGE FEE) |
| (JOB NUMBER) | (TYPE OF JOB) | (CPU TIME) | (USAGE FEE) |
| TOTAL | | (TOTAL CPU TIME) | (TOTAL USAGE FEE) |